# FASCICULE DE BREVET EUROPEEN

(11) **EP 2 445 824 B1**
(45) Date de publication et mention de la délivrance du brevet: **12.06.2013**
(21) Numéro de dépôt: 10745292.2
(22) Date de dépôt: 22.06.2010
(51) Int. Cl.: B66D 1/14, B66D 1/54, B66D 5/14, F16D 55/224, F16D 63/00, F16D 65/14

(54) **SYSTEME DE SECURITE POUR PIECE TOURNANTE ET TREUIL DE LEVAGE EQUIPE D'UN TEL SYSTEME**
SICHERHEITSSYSTEM FÜR EINEN ROTIERENDEN TEIL UND MIT EINEM SOLCHEN SYSTEM AUSGESTATTETE HEBEWINDE
SAFETY SYSTEM FOR A ROTATING PART, AND HOISTING WINCH PROVIDED WITH ONE SUCH SYSTEM

(30) Priorité: 23.06.2009 FR 0954257
(43) Date de publication de la demande: 02.05.2012
(73) Titulaire: ABCD, 38200 Vienne (FR)
(72) Inventeur: DREVET, Christian, F-38200 Vienne (FR)
(74) Mandataire: Myon, Gérard Jean-Pierre
(86) Numéro de dépôt international: PCT/FR2010/051266
(87) Numéro de publication internationale: WO 2010/149924

(56) Documents cités:
- EP-A1- 0 978 473
- FR-A1- 2 189 302
- FR-A1- 2 824 057
- US-A- 2 143 330
- US-A1- 2008 156 132

## Description

La présente invention concerne le domaine technique des systèmes de sécurité utilisés pour sécuriser la rotation d'une pièce tournante, soumise à des couples importants, en cas de défaillance du système d'entraînement. Dans une application préférée mais non exclusive, l'invention concerne plus particulièrement les systèmes de sécurité utilisés pour sécuriser la rotation d'un tambour de treuil de levage en cas de défaillance du système d'entraînement du treuil.

Dans le domaine de la manutention, il est par exemple connu de mettre en oeuvre pour soulever des charges particulièrement importantes des systèmes de treuil à câbles reliés directement ou par l'intermédiaire d'un moufle à une charge à soulever. De tels systèmes de treuils sont par exemple utilisés sur les grues mobiles, les ponts de manutention ou encore les grues ou les portiques portuaires. De tels treuils comprennent généralement un châssis supportant un tambour mobile en rotation et entraîné par un motoréducteur. Afin de prévenir les conséquences dues à une défaillance du motoréducteur, il est mis en oeuvre des systèmes de sécurité qui comprennent, par exemple, des freins déclenchés ou fermés en cas de vitesse de rotation ou d'accélération du tambour supérieures à une valeur admissible. De tels systèmes permettent de stopper la charge mais présentent toutefois des inconvénients inhérents à leur conception. Tout d'abord, ils présentent des temps de déclenchement non nuls durant lesquels la charge manutentionnée se déplace et se trouve susceptible d'acquérir une certaine énergie cinétique qui impose de dimensionner les freins de manière à permettre une évacuation de l'intégralité de l'énergie cinétique de la charge transportée. Ainsi, pour les engins de levage de forte puissance, il est nécessaire de prévoir des systèmes de freins dimensionnés en conséquence. De plus, dans l'intervalle de déclenchement ou fermeture, la charge transportée est susceptible de se déplacer d'une distance qui peut alors être la source d'accidents. Enfin, en cas de défaillance de la détection, les freins peuvent rester en position ouverte et le système de manutention n'est plus sécurisé.

Afin de remédier à cet inconvénient lié au temps de déclenchement, une demande de brevet FR 2 189 302 a proposé un système de sécurité qui comprend une roue dentée, dite creuse, solidaire en rotation du tambour du treuil et une vis sans fin engrenant la roue creuse. La vis sans fin est entraînée en rotation par un système d'entraînement suiveur. La vis sans fin et le système d'entraînement suiveur sont alors solidaires d'un châssis supportant le treuil de levage. Le système d'entraînement suiveur est piloté par des moyens de commande mécanique ou électronique adaptés pour assurer une rotation de la vis autorisant une rotation de la roue creuse correspondant à une consigne de rotation du tambour. Cette consigne de rotation résulte généralement de la commande du treuil de levage par un opérateur. En fonctionnement normal, le pilotage du système suiveur assure donc une synchronisation des rotations de la vis sans fin, de la roue creuse et du tambour. En cas de défaillance du système d'entraînement du tambour, ce dernier aura tendance à connaître une vitesse de rotation différente de la vitesse de consigne et il apparaîtra une désynchronisation de la rotation de la vis sans fin et de la roue creuse. Compte tenu de l'irréversibilité de la transmission à roue creuse et vis sans fin, un blocage de cette transmission intervient immobilisant le tambour à sa position au moment de la défaillance. Un tel système de sécurité présente l'avantage de ne faire intervenir aucun temps de réponse, si ce n'est éventuellement celui résultant des jeux de fonctionnement. Toutefois, dans le cas de la manutention d'une charge importante, le blocage intervenant au niveau de la liaison vis sans fin / roue creuse induit des contraintes particulièrement élevées susceptibles de détériorer les dents de la roue creuse ou le filet de la vis rendant impossible une remise en service du treuil sous charge. Afin de remédier à ces inconvénients, il a été proposé des systèmes d'absorption des chocs autorisant un déplacement axial de la vis sans fin. Cependant, de tels systèmes sont particulièrement difficiles à dimensionner. De plus, dans l'éventualité où la liaison roue/vis serait utilisée pour réaliser l'affalage de la charge, cet affalage entraînera alors une détérioration irréversible de la vis et de la roue creuse en raison des frottements s'exerçant sous charge entre la vis et la roue creuse, de sorte qu'il sera nécessaire de les changer pour la remise en service du treuil.

Il est donc apparu le besoin d'un nouveau système de sécurité, mettant en oeuvre une liaison de type roue et vis, qui présente les mêmes facteurs de fiabilité des systèmes selon l'art antérieur mais qui soit plus faciles à dimensionner et qui soit en mesure d'absorber des quantités d'énergies importantes sans risque de détérioration, de manière à permettre un décrochage de la charge transportée au moment de l'incident sans intervention d'un engin de levage de secours et sans risque de détérioration du système de sécurité lors de l'affalage.

Afin d'atteindre ces objectifs, l'invention concerne un treuil de levage comprenant :
- un châssis supportant :
   - un tambour mobile en rotation d'axe Δ pour l'enroulement d'un câble ou analogue,
   - un système d'entraînement principal adapté pour assurer la rotation du tambour selon une consigne,
- un système de sécurité qui comprend une roue dentée, dite creuse, solidaire en rotation du tambour et une vis sans fin engrenant la roue creuse et étant entraînée en rotation par un système d'entraînement suiveur,
- des moyens de commande adaptés pour piloter le système d'entraînement suiveur pour assurer une rotation de la vis autorisant une rotation de la roue creuse correspondant à la consigne de rotation du tambour.

Selon l'invention, le système de sécurité comprend en outre :
- au moins un disque de freinage qui est mobile en rotation selon un axe de rotation et qui supporte la vis sans fin et le système entraînement auxiliaire,
- au moins un étrier de frein qui est fixé au châssis et qui comprend au moins une mâchoire asservie en position de serrage du disque et commandée en ouverture.

Au sens de l'invention, la caractéristique selon laquelle la mâchoire de l'étrier de frein est asservie en position de serrage du disque et commandée en ouverture, doit être comprise comme signifiant qu'en position normale, la mâchoire est serrée sur le disque de frein faisant obstacle à sa rotation, tandis qu'en cas de besoin, il est possible de commander une ouverture de ladite mâchoire, soit en agissant directement sur le système de serrage intégré à l'étrier, soit en agissant sur un système de commande à distance du desserrage de la mâchoire. Un tel système de commande à distance sera, de préférence, mais non nécessairement conçu pour permettre un desserrage progressif et un resserrage autorisant un contrôle précis de la rotation du disque.

En cas de défaillance du système d'entraînement principal, l'énergie transmise à la vis sans fin résultant du blocage de la rotation de la roue creuse par la vis peut être dissipée par le disque de frein au niveau de la mâchoire sans risque d'emballement de la charge ou de la rotation du tambour, puisque la mâchoire est en permanence en position fermée. La mise en oeuvre d'un tel système de sécurité présente l'avantage, par rapport au système prévoyant un amortissement du choc de blocage par la translation de la vis sans fin, de ne pas limiter cette possibilité d'amortissement par la course du système amortisseur, dans la mesure où la rotation du disque n'est pas limitée. De plus, la puissance susceptible d'être dissipée peut être facilement modulée, en augmentant le nombre d'étriers ou de disques et/ou en agissant sur le diamètre du disque ou encore les matériaux de friction mis en oeuvre. Ainsi, le système de l'invention offre une très grande souplesse en termes de dimensionnement et d'encombrement.

Par ailleurs, l'invention offre une très grande fiabilité en cas de déclenchement sous charge du système de sécurité. En effet, l'invention permet, en maîtrisant l'ouverture de la mâchoire de l'étrier, de contrôler la rotation du disque et par là même celle du tambour pour assurer un affalage sécurisé de la charge de sorte que la liaison roue creuse et vis sans fin n'est pas affectée ni détériorée par l'affalage et ne devra donc pas être restaurée pour la remise en service du treuil.

De plus, si le système roue/vis n'a pas été détérioré et qu'il est pas souhaitable ou possible de desserrer le frein, il reste possible, de commander la rotation du tambour en assurant la rotation de la vis, et donc d'affaler la charge en cours de manutention dans des conditions optimales de sécurité résultant du caractère irréversible de l'engrenage roue et vis. Néanmoins, cette deuxième solution ne sera, de préférence, utilisée qu'en dernier recours afin d'éviter une détérioration de la vis sans fin et/ou de la roue. Il sera également noté que l'affalage de secours de la charge au moyen de la liaison roue et vis impose de prévoir un système d'entraînement de secours d'une puissance généralement supérieure à celle du système suiveur.

Il apparaît donc que l'invention offre avantageusement deux options permettant une descente de la charge manutentionnée en toute sécurité avant remise en état de l'entraînement principal. Cette grande versatilité du système de sécurité offre par la redondance des systèmes de secours, une très grande fiabilité compatible avec la manutention de charges importantes ou encore dangereuses.

Selon une variante de l'invention et afin de réduire l'encombrement du système de sécurité, l'axe de rotation D de la roue creuse peut être confondu avec l'axe de rotation de Δ du tambour.

Dans le même esprit et selon une autre variante de l'invention, de rotation du disque de frein peut être confondu avec l'axe de rotation de Δ du tambour.

Selon une forme de réalisation de l'invention visant à réduire les jeux de fonctionnement et donc l'intensité des chocs au niveau du système roue et vis, la roue creuse peut être en prise directe avec le tambour ou un arbre d'entraînement direct du tambour.

Par ailleurs, le système de sécurité mis en oeuvre dans le cadre du treuil de levage selon l'invention, est susceptible d'être mis en oeuvre pour toute pièce tournante dont il convient de maîtriser la rotation en cas de dysfonctionnement de son système d'entraînement.

Ainsi, l'invention concerne également un système de sécurité pour une pièce mobile en rotation par rapport à un châssis, système comprenant une roue dentée dite creuse d'axe D destinée à être lié en rotation à la pièce tournante et une vis sans fin qui engrène la roue creuse et qui est entraînée en rotation par un système d'entraînement suiveur, selon l'invention, le système comprend en outre :
- au moins un disque de freinage dont l'axe confondu avec l'axe D de la roue creuse, et qui supporte la vis sans fin et le système d'entraînement suiveur,
- au moins un étrier de frein qui est destiné à être fixé au châssis et qui comprend une mâchoire asservie en position de serrage du disque et commandée en ouverture.

Un tel système de sécurité peut alors être adapté, soit en première monte sur des systèmes de manutention neufs par exemple, soit au contraire dans le cadre d'opérations de reconditionnement de dispositifs de levage notamment.

Selon une caractéristique de l'invention, le système de sécurité comprend en outre des moyens de guidage en rotation interposés entre la roue creuse et le disque de freinage. Ces moyens de guidage permettent de garantir l'intégrité du système de sécurité pré assemblé avant sa mise en oeuvre ainsi que d'assurer un bon positionnement de la roue creuse par rapport à la vis sans fin en fonctionnement normal.

Selon une forme de réalisation de l'invention, le système d'entraînement suiveur comprend un moteur électrique et une courroie d'entraînement interposée entre la sortie du moteur et la vis sans fin.

Bien entendu, les diverses variantes, formes de réalisation et caractéristiques de l'invention peuvent être associées les unes avec les autres selon différentes combinaisons dans la mesure où elles ne sont pas incompatibles ou exclusives les unes des autres.

Par ailleurs, diverses autres caractéristiques et avantages de l'invention ressortent de la description ci-dessous effectuée en référence aux dessins annexés qui illustrent une forme non limitative de réalisation d'un système de sécurité selon l'invention mis en oeuvre sur un treuil de levage conforme à l'invention.
- La figure 1 est une vue schématique partiellement coupée d'un treuil de levage mettant en oeuvre un système de sécurité conforme à l'invention ;
- La figure 2 est une vue selon la ligne II - II du treuil illustré à la figure 1.

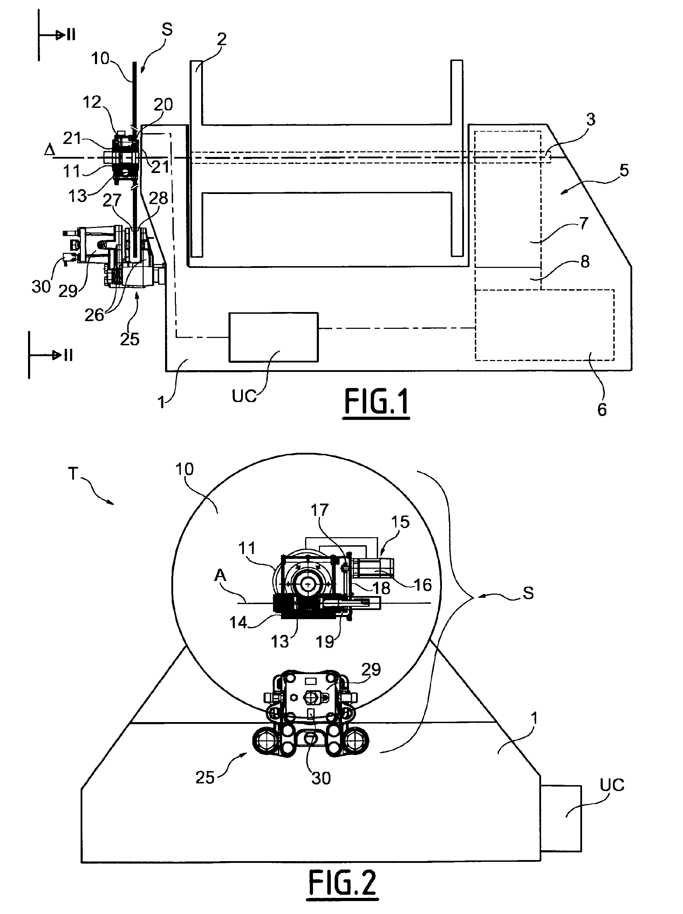

Un système de sécurité selon l'invention désigné dans son ensemble par la référence S à la figure 1, est susceptible d'être mis en oeuvre sur un treuil conforme à l'invention lui-même désigné dans son ensemble par la référence T.

De manière générale, un tel treuil T comprend un châssis supportant un tambour 2 par l'intermédiaire d'un arbre d'entraînement, de sorte que le tambour 2 est mobile en rotation selon un axe Δ. La liaison du tambour 2 et de l'arbre 3 est de préférence adaptée pour assurer la transmission de couples supérieurs à ceux résultant de la manutention de la charge maximale susceptible d'être déplacée par le treuil. La liaison du tambour 2 et de l'arbre 3 peut être réalisée de toute manière appropriée bien connue de l'homme du métier et ne nécessite donc pas plus de description ici. Le tambour 2 est généralement conçu pour assurer l'enroulement et la prise en charge d'un câble de levage non représenté. Afin d'assurer l'entraînement en rotation du tambour 2 dans un sens ou dans un autre selon les besoins, le treuil T comprend en outre un système d'entraînement principal 5 comprenant un moteur électrique 6 accouplé à l'arbre d'entraînement 3 par un réducteur 7. Le mode de réalisation du système d'entraînement principal 5 est également bien connu de l'homme du métier et ne nécessite donc pas de plus amples explications. Selon l'exemple illustré, le système d'entraînement principal 5 comprend un limitateur de couple 8 interposé entre le moteur électrique 6 et le réducteur 7.

Le système d'entraînement principal 5 est commandé par une unité de commande UC adaptée pour assurer la rotation du tambour selon une consigne de sens et de vitesse déterminée par un système de pilotage (non représenté) raccordé à l'unité de commande UC.

Conformément à une caractéristique essentielle de l'invention, le treuil T comprend en outre le système de sécurité S constitué, selon l'exemple illustré, d'un disque de freinage 10 est traversé par un moyeu 11 d'accouplement direct à l'arbre 3. A cet effet, le moyeu 11 comprend un alésage traversant cannelé destiné à venir s'engager sur une extrémité également cannelée de l'arbre 3. Ainsi, le moyeu 11 est parfaitement solidaire en rotation du tambour 2 avec lequel il connaît une rotation synchrone. Le moyeu 11 porte par ailleurs à sa périphérie des dents 12 et forme une roue, dite creuse, destinée à coopérer avec une vis sans fin 13, dont l'axe de rotation A est perpendiculaire à l'axe Δ. Bien entendu, la roue creuse pourrait ne pas faire partie intégrante du moyeu 11 et simplement être fixée de façon rigide à ce dernier ou au disque 10. La vis sans fin 13 est alors supportée par un berceau 14 lié rigidement au disque de freinage 10.

Compte tenu du caractère irréversible de la liaison entre la vis sans fin 13 et la roue 12 constitutive du moyeu 11 du disque de freinage 10, le système de sécurité comprend en outre afin de permettre une rotation du moyeu 11 et donc du tambour 2, indépendamment du disque 10, un système d'entraînement suiveur 15. Selon l'exemple illustré, le système d'entraînement suiveur 15 comprend un moteur électrique 16, dont l'arbre de sortie est équipé d'un pignon 17 entraînant par l'intermédiaire d'une courroie crantée 18, un pignon 19 solidaire en rotation de la vis sans fin 13. Le moteur électrique 16 est alors raccordé à l'unité de commande par un système de collecteur tournant 20. De plus selon l'exemple illustré, des moyens de guidage en rotation, tels que des roulements 21, sont interposés entre le berceau 14 et le moyeu/roue creuse 11. Bien entendu les moyens de guidage pourraient également être formés par des paliers.

Le système de sécurité S comprend également un étrier de frein 25 fixé sur le châssis 1 en étant immobilisé par rapport à ce dernier pour tout mouvement important dans un plan perpendiculaire à l'axe Δ. Selon l'exemple illustré le montage de l'étrier 25 est flottant de manière à autoriser de petits déplacements de l'étrier parallèlement à l'axe Δ afin de suivre les éventuels défauts de rotation du disque de freinage 10. L'étrier 25 comprend une mâchoire 26 équipée de garnitures de frottement 27 et 28 disposées de part et d'autre du disque de freinage 10.

La mâchoire 26 est asservie en fermeture de manière à appliquer en permanence les garnitures 27 et 28 contre le disque 10 en condition normale d'utilisation du treuil T. A cet effet, l'étrier 25 comprend un système d'asservissement 29 en fermeture de la mâchoire 26. Le système d'asservissement 29 peut alors être réalisé de toute façon appropriée telle que par exemple mécanique, hydraulique ou encore électromécanique. Le système d'asservissement comprend en outre des moyens de commande 30 permettant de commander une ouverture progressive de la mâchoire 26 pour piloter le frottement exercé par les garnitures 27 et 28 sur le disque de freinage 10.

Le treuil T, ainsi constitué, fonctionne de la manière suivante. En fonction d'ordres reçus par l'intermédiaire d'un dispositif de commande manuelle non représentée ou encore d'un système informatisé de commande, l'unité de commande UC détermine une consigne de rotation du tambour 2 en sens et en vitesse. L'unité de commande UC pilote alors le système d'entraînement principal 5 de manière à obtenir une rotation du tambour 2 conforme à cette consigne. Afin que la rotation du tambour 2 ne soit pas entravée par le système de sécurité S, l'unité de commande UC pilote également le système d'entraînement suiveur 15 et plus particulièrement le moteur 16 pour que la rotation de la vis sans fin 13 permette une rotation de la roue creuse 11 et donc du tambour 2 qui en est solidaire, selon un sens et une vitesse conformes à la consigne. Il est à noter que le système d'entraînement suiveur 15 est alors adapté pour présenter une puissance suffisante pour compenser les frottements entre la vis 13 et la roue creuse 11 sans toutefois être en mesure de participer à l'entraînement du tambour 2. Ainsi, le système d'entraînement suiveur 15 présentera une puissance très nettement inférieure à la puissance du système d'entraînement principal 5.

Tant que la vitesse du tambour 2 est conforme à la consigne appliquée au système d'entraînement principal 5 et au système d'entraînement suiveur 15, la rotation du tambour 2 s'effectue de façon normale.

En revanche, si la rotation du tambour 2 n'est pas conforme à la consigne en raison par exemple d'un disfonctionnement ou d'une rupture du système entraînement principal 5, il apparaît une désynchronisation, entre la rotation de la roue creuse 11 et celle de la vis 13, qui induit blocage de la rotation de la roue creuse 11 contre la vis 11. La roue creuse 11 et donc le tambour 2 se trouvent alors liés en rotation au disque de freinage 10. Dans la mesure où la mâchoire 26 est fermée sur le disque de freinage 10, il en résulte donc un arrêt ou un blocage de la rotation du tambour 2. Toutefois, dans la mesure où le tambour 2 est susceptible de connaître une vitesse de rotation relativement élevée, tout en déplaçant une charge importante, l'énergie, induite par le blocage en rotation du tambour 2, peut alors être dissipée par frottement au niveau des garnitures 27 et 28. Ainsi, le système de sécurité selon l'invention, permet de dissiper d'importantes quantités d'énergie en réduisant les risques de détérioration de l'engrenage roue et vis, ainsi que de la charge manutentionnée au moyen du treuil T selon l'invention.

Il est à noter que la chaîne de liaison entre le tambour 2 et la vis 13 sera alors réalisé pour présenter des jeux de fonctionnement aussi faibles que possible et donc de réduire les chocs résultant du blocage, ainsi que le temps de réponse du système de sécurité selon l'invention. Par ailleurs, le limitateur de couple 7 intégré au système d'entraînement principal 5 permet d'éviter que l'intégralité de la puissance du moteur 6 ne soit transmise, lors du blocage, au système en défaut.

Dans l'éventualité où un tel blocage intervient suite à un dysfonctionnement du système d'entraînement principal 5, il est alors possible de déposer ou affaler la charge manutentionnée au moyen du treuil T en assurant, par la mise en oeuvre des moyens de commande 30, une ouverture contrôlée de la mâchoire 26 et ainsi une rotation contrôlée du tambour 2. Ce mode d'affalage de charge permet de préserver l'intégrité de la vis 13 et de la roue creuse 12.

Si toutefois pour quelque raison que se soit il n'est pas possible ou souhaitable de desserrer le ou les freins, il est toujours possible de procéder à l'affalage de la charge transportée au moment du blocage en agissant manuellement sur la vis 13 ou en venant raccorder à cette dernière un système d'entraînement électrique de secours non représenté. La mise en oeuvre d'un tel système d'entraînement de secours augmente toutefois le coût de conception de l'installation et fait courir un risque de détérioration au système roue et vis si ce dernier n'a pas été dimensionné à cet effet.

Ainsi, le système de sécurité selon l'invention offre, par la redondance des fonctions d'assistance à la rotation contrôlée du tambour 2 en cas de disfonctionnement de l'entraînement principal, une très grande sécurité. Il est à noter que le système de sécurité S selon l'invention peut également être mis en oeuvre pour tout autre type d'application faisant intervenir des éléments tournants de forte puissance ou soumis à des couples importants.

Bien entendu, diverses modifications peuvent être apportées au treuil selon l'invention, ainsi qu'au système de sécurité selon l'invention dans le cadre des présentes revendications.

## Revendications

1. Treuil de levage comprenant :
- un châssis (1) supportant :
- un tambour (2) mobile en rotation d'axe Δ pour l'enroulement d'un câble ou analogue,
- un système d'entraînement principal (5) adapté pour assurer la rotation du tambour (2) selon une consigne,
- un système de sécurité (S) qui comprend une roue dentée, dite creuse, (12) solidaire en rotation du tambour (2) et une vis sans fin (13) engrenant la roue creuse (12) et étant entraînée en rotation par un système d'entraînement suiveur (15),
- des moyens de commande adaptés pour piloter le système d'entraînement suiveur pour assurer une rotation de la vis autorisant une rotation de la roue creuse (12) correspondant à la consigne de rotation du tambour (2), **caractérisé en ce que** le système de sécurité (S) comprend en outre :
- au moins un disque de freinage (10) qui est mobile en rotation selon un axe de rotation et qui supporte la vis sans fin (13) et le système entraînement suiveur (15),
- au moins un étrier de frein (25) qui est fixé au châssis (1) et qui comprend une mâchoire (26) asservie en position de serrage du disque (10) et commandée en ouverture.

2. Treuil de levage selon la revendication 1, **caractérisé en ce que** l'axe de rotation D de la roue creuse (12) est confondu avec l'axe de rotation de Δ du tambour.

3. Treuil de levage selon la revendication 1 ou 2, **caractérisé en ce que** la roue creuse (12) est en prise directe avec le tambour (2) ou un arbre d'entraînement direct du tambour (2).

4. Treuil de levage selon l'une des revendications 1 à 3, **caractérisé en ce que** l'axe de rotation du disque de freinage (10) est parallèle ou confondu avec l'axe de rotation de la roue creuse (12).

5. Treuil de levage selon l'une des revendications 1 à 4, **caractérisé en ce que** le système d'entraînement suiveur (15) comprend un moteur électrique (16) et une courroie d'entraînement (18) interposée entre la sortie du moteur électrique (16) et la vis sans fin (13).

6. Treuil de levage selon l'une des revendications 1 à 5, **caractérisé en ce que** le système d'entraînement principal (5) comprend un limitateur de couple (8).

7. Système de sécurité pour une pièce mobile en rotation par rapport à un châssis, système comprenant une roue dentée dite creuse d'axe D destinée à être lié en rotation à la pièce tournante et une vis sans fin (13) qui engrène la roue creuse (12) et qui est entraînée en rotation par un système d'entraînement suiveur (15), **caractérisé en ce qu'**il comprend en outre :
- au moins un disque de freinage (10) dont l'axe confondu avec l'axe D de la roue creuse (12), et qui supporte la vis sans fin (13) et le système d'entraînement suiveur (15),
- au moins un étrier de frein (25) qui est destiné à être fixé au châssis et qui comprend une mâchoire (26) asservie en position de serrage du disque et commandée en ouverture.

8. Système de sécurité selon la revendication 7, **caractérisé en ce qu'**il comprend des moyens (21) de guidage en rotation interposés entre la roue creuse (12) et le disque de freinage (10).

9. Système de sécurité selon la revendication 7 ou 8, **caractérisé en ce que** le système d'entraînement suiveur (15) comprend un moteur électrique (16) et une courroie d'entraînement (18) interposée entre la sortie du moteur (16) et la vis sans fin (13).

## Patentansprüche

1. Hebewinde, aufweisend:
- einen Rahmen (1), tragend:
- eine Trommel (2), die um eine Achse Δ drehbewegbar ist, um ein Seil oder dergleichen aufzurollen,
- ein Hauptantriebssystem (5), das eingerichtet ist, um die Drehung der Trommel (2) gemäß einer Anweisung zu gewährleisten,
- ein Sicherheitssystem (S), welches aufweist ein Hohl-Zahnrad (12), das mit der Trommel (2) drehfest verbunden ist, und eine Schnecke (13), welche mit dem Hohl-Rad (12) im Eingriff ist und welches von einem Folge-Antriebssystem (15) drehangetrieben ist,
- Steuermittel, die angepasst sind zum Steuern des Folge-Antriebssystems zum Gewährleisten einer Drehung der Schnecke unter Erlauben einer Drehung des Hohl-Rads (12) entsprechend der Drehanweisung der Trommel (2),
**dadurch gekennzeichnet, dass** das Sicherheitssystem (S) ferner aufweist:
- wenigstens eine Bremsscheibe (10), die um eine Drehachse drehbewegbar ist und die die Schnecke (13) und das Folge-Antriebssystem (15) trägt,
- wenigstens einen Bremssattel (25), der am Rahmen (1) befestigt ist und der eine Backe (26) aufweist, die eine Festklemmposition der Scheibe (10) bewirkt und die auf offen steuerbar ist.

2. Hebewinde gemäß Anspruch 1, **dadurch gekennzeichnet, dass** die Drehachse D des Hohl-Rads (12) mit der Drehachse Δ der Trommel fluchtet.

3. Hebewinde gemäß Anspruch 1 oder 2, **dadurch gekennzeichnet, dass** das Hohl-Rad (12) in direktem Kontakt steht mit der Trommel (2) oder einer direkten Antriebswelle der Trommel (2).

4. Hebewinde gemäß einem der Ansprüche 1 bis 3, **dadurch gekennzeichnet, dass** die Drehachse der Bremsscheibe (10) parallel ist oder zusammenfällt mit der Drehachse des Hohl-Rads (12).

5. Hebewinde gemäß einem der Ansprüche 1 bis 4, **dadurch gekennzeichnet, dass** das Folge-Antriebssystem (15) einen Elektromotor (16) und einen Antriebsriemen (18) aufweist, der zwischen dem Elektromotorausgang (16) und der Schnecke (13) zwischengeordnet ist.

6. Hebewinde gemäß einem der Ansprüche 1 bis 5, **dadurch gekennzeichnet, dass** das Hauptantriebssystem (5) einen Drehmomentbegrenzer (8) aufweist.

7. Sicherheitssystem für ein Teil, das bezüglich eines Rahmens drehbewegbar ist, wobei das System aufweist ein Hohl-Zahnrad mit Achse D, welches dazu bestimmt ist, um mit dem Dreh-Teil drehverbunden zu sein, und eine Schnecke (13), die mit dem Hohlrad (12) im Eingriff ist und die von einem Folge-Antriebssystem (15) drehangetrieben ist, **dadurch gekennzeichnet, dass** es ferner aufweist:
- wenigstens eine Bremsscheibe (10), deren Achse mit der Achse D des Hohlrads (12) im Eingriff ist und die die Schnecke (13) und das Folge-Antriebssystem (15) trägt,
- wenigstens ein Bremssattel (25), der dazu bestimmt ist, am Rahmen befestigt zu sein und der eine Bremsbacke (26) aufweist, die eine Festklemmposition der Scheibe bewirkt und die auf offen steuerbar ist.

8. Sicherheitssystem gemäß Anspruch 7, **dadurch gekennzeichnet, dass** es Drehführungsmittel (21) aufweist, die zwischen dem Hohl-Rad (12) und der Bremsscheibe (10) angeordnet sinc.

9. Sicherheitssystem gemäß Anspruch 7 oder 8, **dadurch gekennzeichnet, dass** das Folge-Antriebssystem (15) einen Elektromotor (16) und einen Antriebsriemen (18) aufweist, der zwischen dem Motorausgang (16) und der Schnecke (13) zwischengeordnet ist.

## Claims

1. Hoisting winch comprising:
- a frame (1) supporting:
- a drum (2) movable in rotation with an axis Δ for winding a cable or similar,
- a main drive system (5) configured to rotate the drum (2) in accordance with specific instructions,
- a safety system (S) comprising a gear wheel, namely a worm gear (12), rotating in unison with the drum (2) and a worm (13) meshing with the worm gear (12) and being driven in rotation by a follower drive system (15),
- control means configured to control the follower drive system in order to rotate the worm enabling a rotation of the worm gear (12) corresponding to the specific rotation instructions of the drum (2), **characterised in that** the safety system (S) further comprises:
- at least one brake disc (10) which is movable in rotation about an axis of rotation and which supports the worm (13) and the follower drive system (15),
- at least one brake calliper (25) which is secured to the frame (1) and which comprises a shoe (26) which is servo-controlled when the disc (10) is in the locked position and opened by control command.

2. Hoisting winch as claimed in claim 1, **characterised in that** the axis of rotation D of the worm gear (12) coincides with the axis of rotation Δ of the drum.

3. Hoisting winch as claimed in claim 1 or 2, **characterised in that** the worm gear (12) is in direct engagement with the drum (2) or a direct drive shaft of the drum (2).

4. Hoisting winch as claimed in one of claims 1 to 3, **characterised in that** the axis of rotation of the brake disc (10) is parallel or coincides with the axis of rotation of the worm gear (12).

5. Hoisting winch as claimed in one of claims 1 to 4, **characterised in that** the follower drive system (15) comprises an electric motor (16) and a drive belt (18) interposed between the output of the electric motor (16) and the worm (13).

6. Hoisting winch as claimed in one of claims 1 to 5, **characterised in that** the main drive system (5) comprises a torque limiter (8).

7. Safety system for a part movable in rotation relative to a frame, which system comprises a gear wheel, namely a worm gear, with an axis D designed to be connected to the turning part in rotation and a worm (13) which meshes with the worm gear (12) and which is driven in rotation by a follower drive system (15), **characterised in that** it further comprises:
- at least one brake disc (10), the axis of which coincides with the axis D of the worm gear (12) and which supports the worm (13) and the follower drive system (15),
- at least one brake calliper (25) which is designed to be secured to the frame and which comprises a shoe (26), which is servo-controlled when the disc is in the locked position and opened by control command.

8. Safety system as claimed in claim 7, **characterised in that** it has means (21) to guide the rotating movement interposed between the worm gear (12) and the brake disc (10).

9. Safety system as claimed in claim 7 or 8, **characterised in that** the follower drive system (15) comprises an electric motor (16) and a drive belt (18) interposed between the output of the motor (16) and the worm (13).
